Europäisches Patentamt

European Patent Office

Office européen des brevets

(19)

(11) Veröffentlichungsnummer: **0 087 133**
**A2**

## (12) EUROPÄISCHE PATENTANMELDUNG

(21) Anmeldenummer: **83101544.1**

(22) Anmeldetag: **18.02.83**

(51) Int. Cl.³: **D 01 D 1/00**
//C08J11/04, B29C29/00

(30) Priorität: **20.02.82 DE 3206203**

(43) Veröffentlichungstag der Anmeldung:
**31.08.83 Patentblatt 83/35**

(84) Benannte Vertragsstaaten:
**BE CH DE FR IT LI LU NL**

(71) Anmelder: **Norddeutsche Faserwerke GmbH
Tungendorfer Strasse 10
D-2350 Neumünster(DE)**

(72) Erfinder: **Stark, Günter
Tannenweg 10
D-2352 Mühbrook(DE)**

(74) Vertreter: **Krug, Joachim, Dr.
Möllerstrasse 58
D-4390 Gladbeck(DE)**

(54) Verfahren zur Verwertung von Abfällen Schmelzgesponnener Fasern.

(57) Abfälle schmelzgesponnener Fasern werden verwertet durch Verdichten, Einbringen ohne vorherige Trocknung in eine Rostspinnmaschine oder einen Entgasungsextruder, Wiederaufschmelzen, Filtration der Schmelze, Zudosierung dieser Schmelze zu einer frischen Polymerisatschmelze, insbesondere im Verhältnis 1 : 20 bis 1 : 2, bevorzugt 1 : 10 bis 1 : 4, intensive Vermischung beider Schmelzen und Verspinnen des Gemisches zu Fasern.

EP 0 087 133 A2

Croydon Printing Company Ltd

0087133

Norddeutsche Faserwerke GmbH, Neumünster

Verfahren zur Verwertung von Abfällen schmelzgesponnener
Fasern

Bei der Herstellung von Filamenten, Fäden und Fasern - im folgenden zusammenfassend als Fasern bezeichnet - aus synthetischen Hochpolymeren durch Schmelzspinnen ergeben sich in verschiedenen Verfahrensstufen Abfallfasern, die für eine Weiterverarbeitung ungeeignet sind. Derartige Abfallprodukte entstehen z. B. beim Anspinnen und Abstellen, beim Aufwinden, Verstrecken, Texturieren und anderen Verarbeitungsstufen. Dieser Abfall stellt einen beachtlichen Kostenfaktor dar, so daß man sich seit langem bemüht, die Abfälle zu verwerten. Z. B. ist in der DD-PS 78 052 ein Verfahren zur Wiederverwendung von Abfällen aus der Polyamidfaserproduktion für textile Zwecke beschrieben, bei dem die mit Präparationen, Mattierungsmitteln und Luftstaubteilchen behafteten und geringfügig thermooxydativ geschädigten Polyamidabfälle erneut zu Chemiefaserstoffen verwertet werden, indem die Abfälle bei etwa 200 °C verdichtet werden und das anfallende Granulat nach entsprechender Trocknung auf einem Endwassergehalt von weniger als 0,05 % mittels einer Rost- oder einer Extruderspinnmaschine versponnen wird. Bei diesem Verfahren wird für die Verdichtung bei höheren Temperaturen und insbesondere für die Trocknung relativ viel Energie benötigt, wodurch das Verfahren verteuert wird.

Auch aus dem Buch von F. Fourné, "Synthetische Fasern", Stuttgart 1964, S. 202, 203 geht hervor, daß Polymerabfälle nach dem Waschen bisher stets getrocknet wurden, bevor sie erneut schmelzgesponnen wurden.

Der Erfindung lag die Aufgabe zugrunde, ein Verfahren der eingangs genannten Art zu vereinfachen und dabei insbesondere Energie zu sparen. Diese Aufgabe wird durch die kennzeichnenden Merkmale des Anspruchs 1 bzw. der des Anspruchs 2 gelöst.

Es wurde überraschenderweise gefunden, daß man auf das energieaufwendige Verdichten bei höheren Temperaturen und insbesondere auf die Trocknung der Abfallfasern verzichten kann, wenn man zum Aufschmelzen der verdichteten Faserabfälle eine Rostspinnmaschine oder einen Entgasungsextruder verwendet und die erhaltende Schmelze nach ihrer Filtration einer Schmelze aus frischem, das heißt nicht bereits einer Verspinnung unterworfen gewesenem Polymerisat zudosiert, beide Schmelzen intensiv mischt und die Mischung verspinnt.

Die Schmelze des frischen Polymerisats kann aus Polymeren bestehen, die von denen der Abfälle verschieden sind; bevorzugt wird jedoch die Zudosierung der Schmelze aus den Abfallstoffen zu einer Schmelze von Polymeren gleicher Art und gleichen Eigenschaften. Das Mengenverhältnis von aufgeschmolzenen Abfällen zu der frischen Polymerenschmelze kann zwischen 1 : 20 und 1 : 2, insbesondere zwischen 1 : 10 und 1 : 4 liegen.

Die beiden Schmelzen werden nach ihrer Zusammenführung miteinander intensiv vermischt, z. B. mittels eines Statikmixers, und dann in üblicher Weise versponnen.

Es war zwar bereits bekannt, eine intensiv gefärbte Polyamidschmelze einer nichtgefärbten Polyamidschmelze zuzudosieren, beide Schmelzen miteinander zu vermischen und die Mischung zu verspinnen. Einer Übertragung dieses Verfahrens auf die Verwertung von Faserabfällen stand aber die Meinung entgegen, die Mischung getrennt hergestellter Polyamide führe zu einer Qualitätsminderung (vgl. Klare "Synthetische Fasern aus Polyamid", Berlin 1963, Seite 173). Da die Faserabfälle bereits einem Schmelzspinnverfahren unterworfen gewesen sind, hat das Polymerisat nicht mehr die gleichen Eigenschaften wie das frische Polymerisat, so daß man wegen des von Klare formulierten Vorurteiles bisher davon abgesehen hat, wiederaufgeschmolzene Faserabfälle einer frischen Polymerisatschmelze zum Verspinnen zuzudosieren.

- 3 -                    0087133

Das erfindungsgemäße Verfahren wird unter Bezugnahme auf die zugehörige Zeichnung beschrieben: Aus einem Vorratsbehälter 1 gelangt frisches Polymerisat über den Zwischenbehälter 2 in den Extruder 3, wo es aufgeschmolzen wird. Der Extruder preßt die Schmelze in die beheizte Leitung 9. Gleichzeitig werden verdichtete Faserabfälle aus dem Vorratsbehälter 4 in den Rostschmelzspinnkopf 5 gefördert. Dort verdampfen das anhaftende Wasser sowie eventuell weiter anhaftende niedermolekulare organische Substanzen wie Präparationsöle. Die so gewonnene Schmelze wird mittels einer Zahnraddosierpumpe 6, die von dem regelbaren Motor 7 angetrieben wird, durch das Filter 8 in die Leitung 9 gedrückt, vereinigt sich dort mit der Hauptschmelze aus frischem Polymerisat und wird mit dieser im Intensivmischer 10 gleichmäßig vermischt. Die Mischung beider Schmelzen wird dann über die Spinnköpfe 11 versponnen.

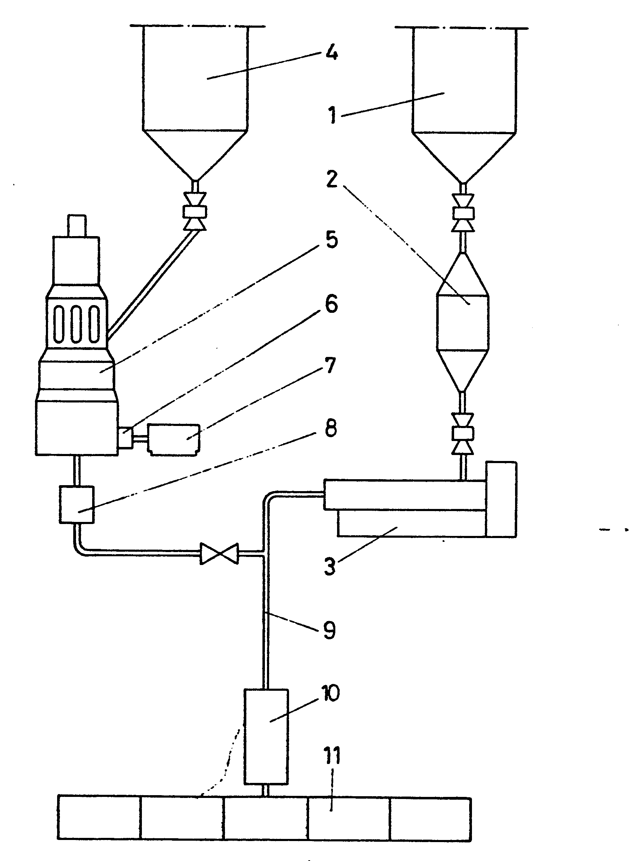

Patentansprüche

1. Verfahren zur Verwertung von Abfällen schmelzgesponnener Fasern durch Verdichten, Wiederaufschmelzen und Verspinnen, dadurch gekennzeichnet, daß die Abfälle ohne vorherige Trocknung in eine Rostspinnmaschine eingebracht werden, die daraus erhaltende Schmelze filtriert, einer frischen Polymerisatschmelze zudosiert, mit dieser intensiv vermischt und das Gemisch versponnen wird.

2. Abänderung des Verfahrens nach Anspruch 1, dadurch gekennzeichnet, daß die Abfälle ohne vorherige Trocknung in einen Entgasungsextruder eingebracht werden, die daraus erhaltende Schmelze filtriert, einer frischen Polymerisatschmelze zudosiert, mit dieser intensiv vermischt und das Gemisch versponnen wird.

3. Verfahren nach Anspruch 1 oder 2, dadurch gekennzeichnet, daß die aufgeschmolzenen Abfälle im Verhältnis 1 : 20 bis 1 : 2, insbesondere 1 : 10 bis 1 : 4 der frischen Polymerisatschmelze zudosiert werden.